# EUROPEAN PATENT SPECIFICATION

(11) **EP 1 746 168 B1**
(45) Date of publication and mention of the grant of the patent: **15.04.2009**
(21) Application number: 05015134.9
(22) Date of filing: 12.07.2005
(51) Int. Cl.: C12Q 1/68, B01L 3/00

(54) **A microarray assembly comprising a microporous membrane and an incubation chamber arrangement**
Microarray-Vorrichtung mit mikroporöser Membrane und einer Inkubationskammernanordnung
Appareil de micro-réseaux avec une membrane microporeuse et ensemble des chambres de incubation

(43) Date of publication of application: 24.01.2007
(73) Proprietor: Sartorius Stedim Biotech GmbH, 37079 Göttingen (DE)
(72) Inventor: Jallerat, Eric, 92410 Ville d'Avray (FR); Pflanz, Karl, Dr., 37130 Gleichen (DE); Hollas, Markus, Dr., 37077 Göttingen (DE)
(74) Representative: Müller-Boré & Partner Patentanwälte

(56) References cited:
- WO-A-01/36974
- WO-A-01/66688
- WO-A-03/025573
- WO-A-20/04007078
- WO-A-20/04099438
- US-A- 6 037 127

## Description

The present invention relates to a microarray assembly which is adopted for carrying out a chemical reaction, in particular a hybridization reaction, and comprises a microporous membrane having a plurality of different analyte-specific capture molecules attached in a microarray format, said membrane being arranged in a specific hybridization or incubation chamber arrangement. Said hybridization chamber along with the microarray patterned membrane allows, through centrifugation or capillary forces or air pressure or other means, a rapid lateral flow of a sample solution to be analyzed through the spotted membrane. Further, the microarray assembly according to the present invention facilitates a rapid contact through convection between the different reagents and thus considerably reduces the incubation time from several hours to a few minutes. It allows also, through a better use, to utilize less sample.

A number of recent studies have shown the great potential of microarray configurated chips like protein chips or DNA chips. In particular, protein microarrays or chips are becoming more and more popular in research laboratories. Like the DNA chips, the protein chips are designed to allow for highly parallel testing.

DNA and protein chips are usually composed of a nearly standard microscope glass slide with sometimes a specific surface treatment. On such a slide are fixed hundreds to thousands of different DNA strands or proteins or other biological or reactive molecules, precisely located in a collection of separated tiny zones on the slide surface, i.e. in a microarray formate. These molecules are usually spotted by using a standard arrayer equipment which is able to dispense tiny drops on the slide surface with a precise pattern. Once the different molecules species are immobilized onto the slide, the microarray is ready to be used

The procedure to use a microarray can be summarized into the following major steps. First step is to put the microarray in contact with the liquid sample to be tested. This is the reaction step or hybridization step where the molecules present in the sample will react with the molecules attached onto the slide surface, so called capture molecules. This reaction between the different species requires some time. Consequently, the sample is normally let in contact or incubated with the slide for some hours. This step is also called incubation step. The last step is to read the surface of the slide to detect where a reaction between the sample molecules and the immobilized ones have occurred. This is usually performed with a scanner being able to read for example a fluorescence signal, but other detection methods are also available.

There are of course some intermediate steps, depending on how the labels that will be read by the scanner are introduced. The sample molecules can be prelabeled. In this case, just after the incubation step, followed by a rinsing step, the slide can be directly read by the scanner. If the sample is not prelabeled, another incubation step can be done with a labeled molecule which will precisely recognize the immobilized complex which is constituted of one sample molecule and one capture molecule of the microarray.

The hybridization or reaction step is generally conducted with a specific device called a hybridization chamber. Different models of chamber exist today, they all achieve their tasks in creating a small void volume on top of the reactive surface of the slide. The sample can be placed in this chamber and the whole assembly slide and chamber can be incubated under shaking for a certain time. Some of these chambers are designed so that the whole slide is placed inside, some other ones are small plastic devices with adhesives, which are just positioned on top of the slide. However, the major hindrance of this hybridization step is the long incubation time which slows down considerably the whole testing process. To this end, the incubation time recommended by the manufacturers of microarrays are varying from a few hours up to overnight. This long reaction kinetic is due to the slow diffusion of the sample molecule to come in contact with the immobilized capture molecules. The sample volume which usually amounts from 100 µl to 1 ml, is present on top of the slide as a thick liquid film. The height of liquid sample in the incubation chamber is pretty big, up from 0.2 to 2 mm or more, when compared to the molecular size and especially compared to the slow diffusion speed of molecules in liquid. So it takes normally a few hours, to be sure that most sample molecules have had a chance to pass close by each immobilized reagents and have a chance to react and hybridize.

Shaking is helping to reduce the incubation, but not significantly as common shakers only move in 2D directions and cannot create a turbulent flow at the flat surface of the slide. Consequently, this problem is particularly specific to microarrays, since in most of the other test formats, it is possible by correct shaking to get better convection flux to be able to bring quickly the two molecule species in contact. In most of the large clinical analyzer for example, the reaction and incubation are conducted in liquid-liquid phase which allow through shaking a better mix of the different reagents. In some other tests, using also a solid phase substrate, the shape of the solid phase allows for a rapid convection.

Most of the current protein chip designs have followed the same approach as in the development of DNA microarrays, i.e., printing spots with capture molecules on a glass coverslide and performing incubation and shaking. This approach can be very problematic for proteomic studies due to the severe diffusion limit in protein hybridization and the less-ideal substrate properties for binding capture molecules. Specifically, for microarrays printed on a solid surface, the reactions and hybridization between analytes and the immobilized capture molecules rely on shaking, which are limited by the slow diffusion of analytes across the boundary layer at the liquid-solid interface, i.e., the reaction is diffusion limited. Since proteins cannot be amplified, this limit is far more severe for protein chips than for DNA chips.

Given the fundamental differences between proteins and nucleotides, glass coverslide is not optimal for protein immobilization. In contrast to the linear structure of oligonucleotides, proteins have complex three-dimensional conformations, and any major deviation from the native conformation may alter the normal functions of the protein molecule. Therefore, one major concern for conventional protein chips is whether capture molecules (e.g., antibodies) will maintain their normal functions upon binding to the hydrophobic coverslide surface. Another major issue is that DNA-DNA and protein-protein interactions may have very different affinities and specific characteristics. DNA-DNA interactions are through long-range base pairing, and they have much lower disassociation rates, much higher affinity and much better specificity than protein-protein interactions, which rely on local conformational matches. Thus, protein microarrays require either high concentration of analytes or high surface concentration of the capture molecules. Unlike DNA, protein samples cannot be amplified, so the only practical approach is to increase the amount of capture molecules immobilized on the surface. Therefore, the substrates for protein chips should have high protein-binding capacity. However, a high surface concentration of capture molecules inevitably leads to more severe diffusion limit and slower hybridization kinetics.

Accordingly, the incubation time is even longer with proteins which have less affinity between them when compared to nucleic acids. Thus, proteins need to be brought very close to each other to be able to bind together.

WO 03/025573 A relates to a solid phase assay device comprising a multi-spot detection zone, having an elongate flow matrix allowing lateral transport of fluid therethrough, wherein said matrix comprises a sample application zone and downstream thereof, a detection zone having immobilised capture agents capable of directly or indirectly binding to said analytes.

Thus, the object underlying the present invention is to provide a respective microarray assembly which allows for a shortened hybridization and incubation time, respectively, in particular when adopted as a protein microarray.

This object is achieved by the embodiments characterized in the claims.

In particular, there is provided a microarray assembly adopted for carrying out a chemical reaction, in particular a hybridization reaction, comprising a microporous membrane having a plurality of different analyte-specific capture molecules attached in a microarray format, said membrane being arranged in an incubation chamber, said device further comprising:
a receptacle for receiving said microporous membrane,
sealing means for substantially encapsulating said membrane in opposition to said receptacle, so that said membrane is urged between said receptacle and said sealing means,
at least one inlet port for supplying a fluid to a first cavity adjacent to a first end of said membrane, and
a second cavity arranged at a substantially opposite second end of said membrane, thereby allowing a fluid laterally flow from said first to said second cavity through said membrane.

The microarray assembly according to the present invention comprises a microporous membrane being arranged in an incubation or hybridization chamber, respectively, which will allow for a lateral flow of the sample to be tested or analyzed through the membrane where the different spotted molecules (capture molecules) are immobilized. The lateral flow will preferably be generated by centrifugal force or air pressure rather than by simple capillarity. However, when providing an absorbent pad in the second cavity, also capillary forces can be used to achieve the lateral flow of the sample to be tested.

According to a preferred embodiment, the microarray assembly according to the present invention further comprises at least one outlet port for venting and discharging said fluid, wherein said at least one outlet port is preferably arranged in fluid connection with said second cavity.

The sealing means usually comprise a cover element contactable with the upper surface of said membrane. Preferably, the cover element is formed by a plastic plate-like sheet, more preferably made of silicone. Moreover, said sealing means further comprise a holding element for directly or indirectly urging said cover element against the upper surface of said membrane. In a further preferred embodiment, said holding element comprises said at least one inlet port and/or said at least one outlet port. Further, said sealing means can comprise locking means for fastening said sealing means to said receptacle with said membrane therebetween.

Said receptacle usually comprises a recess for receiving said microporous membrane having a plurality of different analyte-specific capture molecules immobilized in a microarray format. In particular, said recess at least partly exceeds the dimensions of said membrane, so as to form said first and second cavity. Said receptable can for example be a microarray slide having the standard dimension of a microscopic glass or plastic slide, i.e. 25 mm on 75 mm on 1 mm thick. The slide is preferably made of plastic and has a zone with smaller thickness. This zone corresponds to the spotting area, generally a rectangle of 23 mm on 50 mm or less. The microporous membrane is usually positioned in this place such that the surface of the membrane is at the same level as the remainder of the slide. This zone digged out of the surface of the slide is to compensate for the thickness of the membrane, which is usually from 10 µm to 200 µm, so that the scanner used can focus at the same level. The membrane can be fixed onto the receptable by any common means as adhesives, solvent bonding, energy sealing, insert molding or others.

The microarray assembly according to the present invention can further comprise a housing device, which is adapted to hold said sealing means and said receptacle together, so as to urge said membrane between said receptacle and said sealing means. In particular, the housing device can comprise a base member for receiving said receptacle and at least one lever element pivotable arranged at said base member, so that said receptacle, said membrane and said sealing means are at least partly hold between said base member and said lever element.

Typically, the microarray device according to the present invention is configured to be operated within a centrifuge, thereby causing a lateral flow of said liquid from said first to said second cavity through said membrane. Thus, according to a preferred embodiment, the microarray assembly according to the present invention further comprises pressure exerting means for directly or indirectly exerting a force or pressure on said sealing means and/or said receptacle, wherein said direction of said force or pressure is preferably substantially perpendicular to the widthwise direction of said membrane. Said pressure exerting means can be directly or indirectly provided on said sealing means and/or said receptacle and have preferably a tapered configuration, most preferably a wedge-shaped configuration.

In another embodiment of the microarray device, the hybridization chamber is designed in a lighter construction, providing a first cavity at one end of the membrane with a sealing means, composed of any available means like o-rings or soft plastic polymer rim, to avoid the sample to overflow on the surface of the membrane, and a second cavity at the other end of the membrane. This second cavity contains an absorbent pad which can be made of paper, glass fibers or nonwoven or other porous media, and can have absorbing chemicals like hydrogels or others. This pad is in contact with the membrane. When the sample is poored in the first cavity, the liquid is drawn into the membrane, and will flow laterally through the membrane through the capillary forces of the membrane and then of the absorbent pad. To avoid any overflow in the first cavity, this cavity might also contain a sample pad of lower capillary force than the opposite absorbent pad. The sample can then be directly dispensed on this pad. This assembly allows to perform also a quicker reaction step through convection but without any instruments. As there is no pressure exerted, the chamber can be easily fixed onto the slide with lighter means as soft adhesives or other. Accordingly, this embodiment also adopts a hybridization chamber and a membrane array device, constructed in such way that the sample is also flowing laterally through the membrane from one end to the other end. However, the moving force is not centrifugal or air, but only the capillary force of an absorbent pad positioned at the opposite end, i.e. the second cavity.

The analyte-specific capture molecules immobilized on the microporous membrane are typically proteins, like antibodies, or peptides or nucleic acids, preferably proteins. In turn, the analyte is a protein, such as an antibody or an antigen, obtained from a sample of cell lysate, or bodily fluid.

The term "hybridization" is normally used to describe only the reaction between two nucleic acids strands, but nowadays and also in the course of the present invention it is more generally used for the recognition reaction between two molecules, in particular proteins on the microarray assembly.

The material of the microporous membrane used in the present invention is not subject to any limitation as long as it is suited to be used in such microarrays. The membrane can for example be made of PVDF or PES or polyamide or any other polymers being able to form a microporous membrane. However, usually, the membrane is made of cellulose nitrate, cellulose acetate or mixtures thereof. Such cellulose type membranes are well-known in the art. In a common manufacturing process for making cellulose nitrate, nitrate groups substitute the hydroxyl moieties on each sugar unit through treatment with nitric acid. In a common manufacturing process for making cellulose acetate, ester groups substitute the hydroxyl moieties on each sugar unit through treatment with acetate acid. Nitrocellulose generally refers to a mixture of cellulose nitrate and cellulose acetate. In some embodiments, the nitrocellulose refers to a mixture of about 90% cellulose nitrate and about 10% cellulose acetate. Dry nitrocellulose is readily soluble in organic solvents forming a lacquer. Evaporation of the solvents results in deposition of the polymer as a thin film. Pores can be introduced into the film to create a microporous membrane including a non-solvent, such as water, in the lacquer. Pore formation can result from the differential evaporation of the solvent and non-solvent. Thus, porosity and pore size can be controlled easily by the amount of non-solvent in the lacquer. The resulting film is a three-dimensional highly porous structure. The membrane can also have a surface modification to allow for specific binding of the spotted molecules.

Addition of a surfactant during the casting process allows deposition of molecules in aqueous buffers. The most commonly used surfactants are anionic detergents such as sodium dodecyl sulfacte (SDS) or Triton X100. Immobilization of analytes can typically be achieved through drying. Usually, the micropores of said microporous membrane are between 0.05 and 10 µm in diameter. Typically, the micropores can be between about 0.2 and 5 microns.

The figures show:
Figure 1 shows the arrangement of a preferred embodiment of the microarray assembly according to the present invention.
Figure 2 shows a preferred embodiment of the microarray assembly according to the present invention when installed into a centrifugal tube.
Figure 3 shows a preferred embodiment of the microarray assembly according to the present invention when adopted for air pressure operation.
Figure 4 shows another preferred embodiment of the microarray assembly according to the present invention.
Figure 5 shows another embodiment of the microarray assembly according to the present invention.
In the following, the embodiments as illustrated in the accompanying figures are further explained, however, without being restricted to these embodiments.

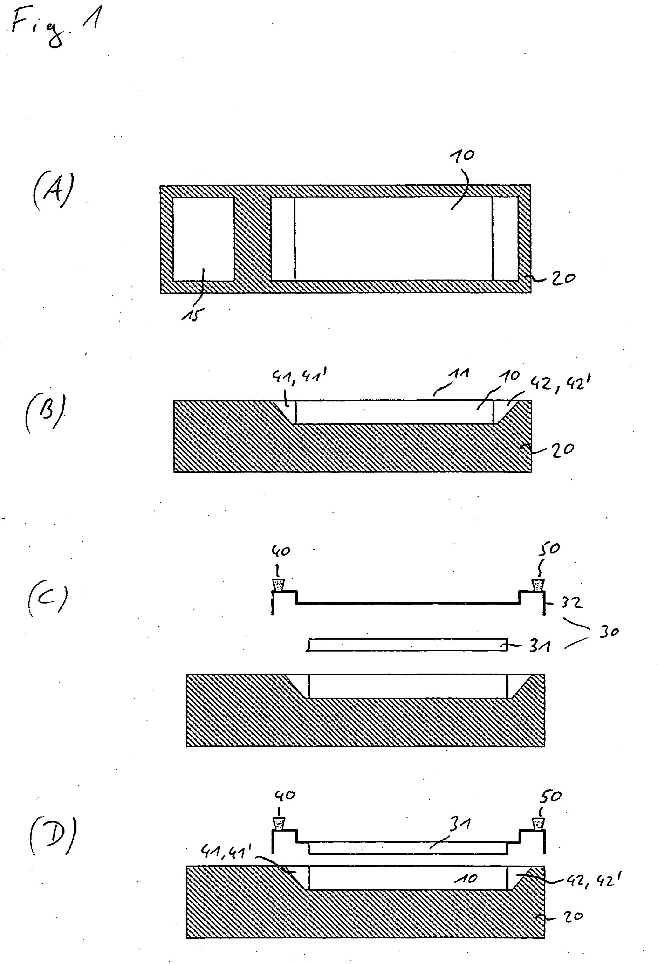

Fig. 1(A) to 1(G) illustrate the arrangement of a preferred embodiment of the microarray assembly according to the present invention. Starting with the top view given in Fig. 1(A), a microarray slide which typically has the standard dimension of a microscopic glass or plastic slide, i.e. 25 mm on 75 mm on 1 mm thick, is taken as receptable (20). On this, there is further arranged a writing zone (15). The slide (20) can preferably be made of plastic and has a zone with smaller thickness. This zone corresponds to the spotting area, generally a rectangle of e.g. 23 mm on 50 mm or less. A microporous membrane (10), preferably a black nitrocellulose, is positioned in this place such that the upper surface (11) of the membrane (10) is at the same level as the rest of the slide. The membrane (10) can be fixed to the plastic surface through normal means such as adhesives or double tape or through solvent bonding or heat or ultrasonic sealing or also insert molding. The receptable, i.e. the microarray slide (20) has two recesses (41, 42) or slopes, respectively, to help for the positioning of the membrane during assembly; cf. the side view given in Fig. 1(B). These two recesses (41, 42) will also create two cavities (41', 42') for the analyte to be tested.

Besides the receptable like the above microarray slide (20) and the membrane (30) itself, the incubation or hybridization chamber is formed by arranging sealing means (30) for substantially encapsulating said membrane in opposition to said receptacle, so that said membrane is urged between said receptacle and said sealing means; cf. Fig. 1(C). Said sealing means (30) comprise a cover element (31) which is preferably a soft plastic sheet, like silicone, and which can cover tightly the membrane. This cover element (31) prevents liquid to flow over the surface of the membrane and instead will force it to flow laterally inside the membrane structure. As second part, the sealing means (30) comprise a more rigid holding element (32) for directly or indirectly urging said cover element against the upper surface of said membrane. Said holding element (32) is placed on top of the cover element (31) and comprises an inlet port (40) and an outlet port (50) to have access to both end cavities (41, 42); cf. Fig. 1(D). Said first and second cavities (41, 42) are formed by recesses of the receptable, as these recesses (41', 42') partly exceed the dimensions of the membrane.

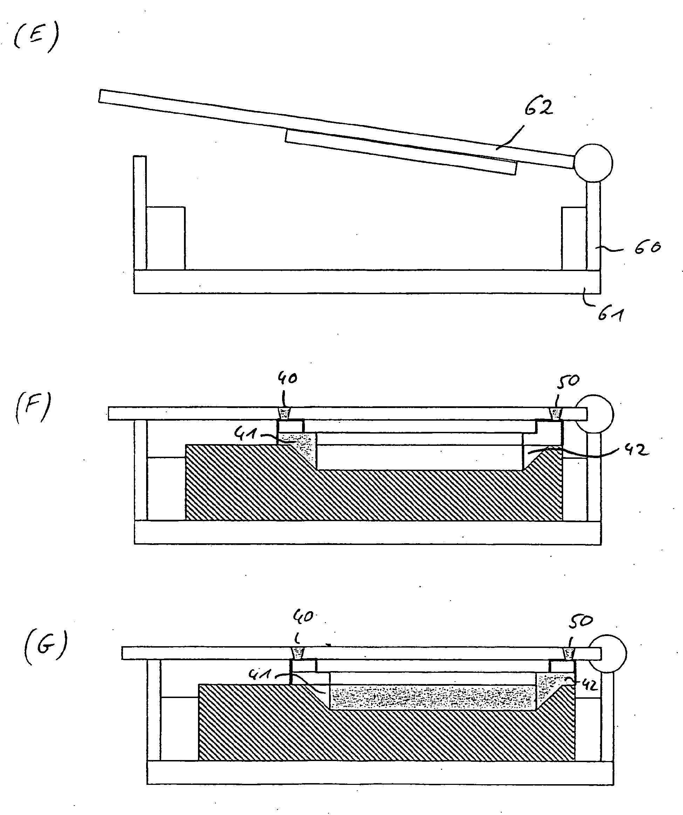

The microarray can further comprise a housing device (60) which is adapted to hold said sealing means (30) and said receptacle (20) together, so as to urge said membrane (10) between said receptacle and said sealing means. In particlar, as shown in Fig. 1(E), said housing device (60) can comprise a base member (61) for receiving said receptacle and at least one lever element (62) pivotable arranged at said base member, so that said receptacle, said membrane and said sealing means are at least partly hold between said base member and said lever element. The housing device can be a metallic or plastic construction.

Once this microarray device with its lateral incubation chamber has been completed, the procedure to follow is then simple. The sample is placed through the inlet port (40) into the first cavity (41); cf. Fig. 1(F). The port is closed and the whole assembly is placed in e.g. a centrifuge tube. During centrifugation the sample is forced to move laterally through the membrane to the opposite second cavity (42); cf. Fig. 1(G). Doing so the sample will flow through the entire membrane internal surface, including also the top surface where the immobilized reagents are more concentrated. Depending on the membrane pore size and on the centrifugal force, the total centrifugation time until all the sample has flown to the second cavity (42) of the chamber, can be only a few minutes. To increase the reaction events and thus the signal, this operation can easily be repeated. A second centrifuge run can be readily performed just by inverting the slide assembly. This can be repeated rapidly several times.

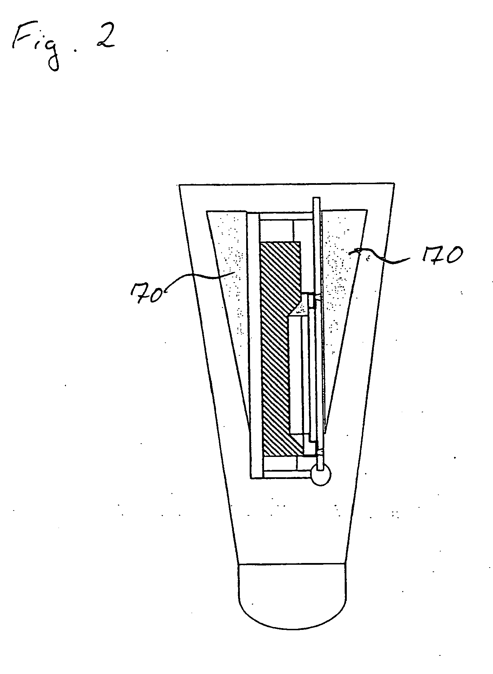

The housing device can be designed such that the pressure exerted to close the chamber on the slide and the membrane will proportionally increase with the centrifugal force. If the centrifugal tube in which this assembly is positioned, is conic, then this housing device can also be conically; cf. Fig. 2. In Fig. 2, the housing device further comprises such pressure exerting means (70) provided on both sides of the housing device and having a wedge-shaped configuration. When subjecting such a microarray assembly to centrifugation, these pressure exerting means will increase the closure pressure as the centrifugal force push the assembly further into the conical centrifuge tube.

The cover element, the holding element and the housing device can be fixed onto the slide once the membrane has been spotted. The microarray assembly will then be ready to use when delivered to customers. By selecting specific plastic materials, the cover element as well as the holding element can even be left in place when performing the scanning step.

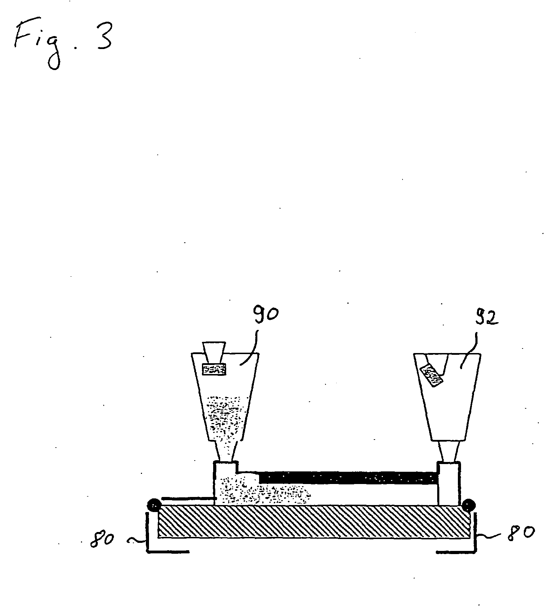

Another embodiment which is adopted to be subjected to air pressure in order to achieve the lateral flow of an analyte solution through the spotted membrane of the present invention is illustrated in Fig. 3. The force necessary to push the sample and the other different solutions into the membrane is generated by air pressure. This can be easily achieved using e.g. small plastic tanks with one way airtight valve and using standard syringe to generate air pressure. As shown in Fig. 3, the assembly according to this embodiment comprises at least one air pressure source, e.g. a tank or vessel (90). Said vessel (90) is preferably set under pressure and brought into fluid connection with the first cavity (41). In particular, the pressure within the vessel (90) is higher than the pressure within the first cavity (41); preferably, the pressure is at least higher than the atmospheric pressure. The vessel (90) could be also formed as a syringe or any equivalent means being capable of providing a pressure within the first cavity (41).

In a preferred embodiment, a second air pressure source (92), preferably identical or similar to the above air pressure source, is provided. This second air pressure source is brought into fluid connection with the second cavity (42). Thereby, the process of forcing the fluid through the membrane from the first to the second cavity can be reversed. This leads advantageously to an improved efficiency of the inventive device.

In case of the provision of two air pressure sources (90, 92)- as shown in Fig. 3 - it is advantageously to ensure that any air provided in the "receiving" cavity (in Fig. 3 the second cavity (42)) can escape, so that the pressure within the membrane is kept substantially on the same level.

Of course, there is no limitation to air as a medium for providing a pressure. Any other fluid, such as any gas or liquid, may be employed as well.

In a preferred embodiment, the sealing means (30) can be fastened to the receptacle with the membrane therebetween by locking means (80). The locking means (80) are directly or indirectly arranged at the sealing means (30). In the embodiment shown in Fig. 3, the locking means (80) are directly arranged at the sealing means (30). Thereby, the locking means (80) may be formed as a bracket, crimp or any other damping means.

In all these different embodiments, the chamber can be fixed already just after the spotting. By this way, the microarray assembly can be shipped as one unit to the final user. The other part either needed for the centrifugation or the air pressure can then be easily installed by the user on top of the microarray assembly.

Another way to reduce the reaction kinetics, limited by the slow diffusion of the molecules to the membrane surface, is to design a filtration microarray. Filtration have been long used for such reaction where one reagent is fixed on a microporous membrane and one other is in the liquid. Then under vacuum or through capillary force the sample is filtered through the membrane. Today, many immunodiagnostic tests are still designed in this flow-through format. Multiwell plates in which up to 1536 tests can be run in parallel, and which are so the predecessor of microarrays, are also available in a filtration format. For example, such a filtration microarray as described in the US patent US2003/0108949A1 presents several advantages, one of them being the possibility to stack several arrays and probe them with the same samples. But if indeed the filtration can considerably reduce the incubation time, the major limitation is that it might reduce it then too much. In a filtration mode, the incubation time or the reaction time which is the time when the two reagents can come in contact together and react, is in fact equal to the filtration time. And this filtration time is most often too short, in the range of a few seconds, to allow for enough reaction events to happen on the membrane surface. So it is often necessary to repeat several times the filtration with the same sample to get enough signal at the end. To this end, a vacuum device cannot be easily inverted, so the sample has to be manually collected and refiltered. On a filtration mode it is also critical to get a uniform flow through all the spotted surface and this is generally difficult to achieve under vacuum, which tends to create preferential filtration routes. Further, the filtration surface is also the surface where the signal will be read. If the different reagents and samples are not completely clean and stable, all particles and contaminants and precipitates will accumulate directly on the membrane surface and will reduce the signal sharpness and intensity. These problems can also be solved by a further embodiment.

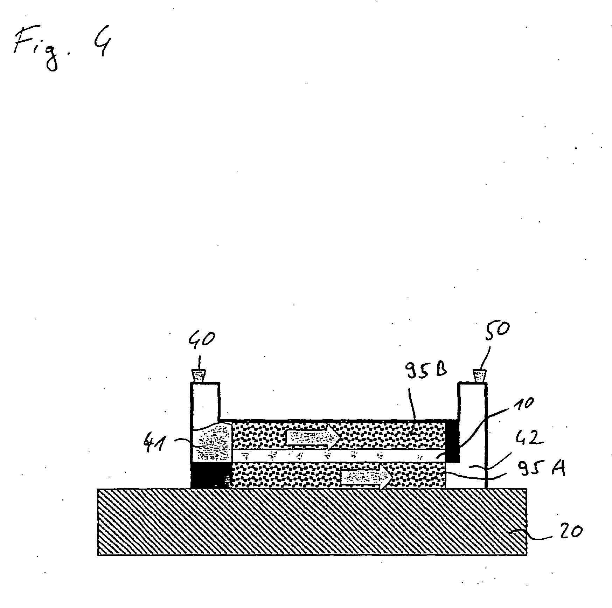

To solve this issue, there is provided a further embodiment of the microarray assembly according the present invention which combines together lateral flow and nearly direct flow-through. The main advantages of this embodiment is a huge increase in reaction kinetics with consequently a decrease in incubation time from a few hours to a few minutes, and an increase of signal intensity, due to the better reaction chances between the molecules species. The direct flow-through in this embodiment is nearly similar to a filtration mode in terms of molecular reaction parameters. This embodiment is schematically exemplified in Fig. 4. The membrane (10) is sandwiched between an overlaying porous material layer (95B) and a porous support layer (95A), wherein the pore size of both of the overlaying porous material layer (95B) and the porous support layer (95A) is greater than the pore size of the membrane. The membrane (10) is laying on top of a porous support layer (95A), preferably a rigid one like a ceramic or a sintered material or fritted glas with a very low non-specific protein binding. The pore size of this porous support is greater than the pore size of the membrane. The hybridization chamber is similar to the one as described hereinabove. It comprises two cavities (41, 42) with access ports (40, 50) to contain the sample solution on both ends of the membrane. But it also has an overlaying porous material layer (95B) which is similar to the one placed beneath the membrane. This porous material layer (95B) covers the membrane. The first cavity (41) of the chamber is designed in such way that when a solution is introduced it can only access the lateral section of the membrane and of the porous material layer (95B). The chamber can be used under centrifugation or under air pressure. When a pressure is exercised, the liquid can then only enter into the membrane and into the porous material layer laterally. When the pore size of the porous material is adopted to be greater than the pore size of the membrane, the liquid will first fill the porous material layer (95B) and then pass nearly vertically down through the membrane (10). The spots at the surface of the membrane will then see the same sample concentration. With the continuous pressure, the liquid will then further pass through the membrane (10) to the porous support layer (95A) and then to the other collecting cavity (42). Similarly to the other embodiments, if one passage is not enough, the process can be done again in a reverse way.

This embodiment presents several advantages compared to a direct filtration mode. It limits the risk of any loss. It can be easily reversed, allowing for multiple passage without the need of handling again the sample. Centrifugal pressure or air pressure can be employed, bot being more versatile than vacuum.

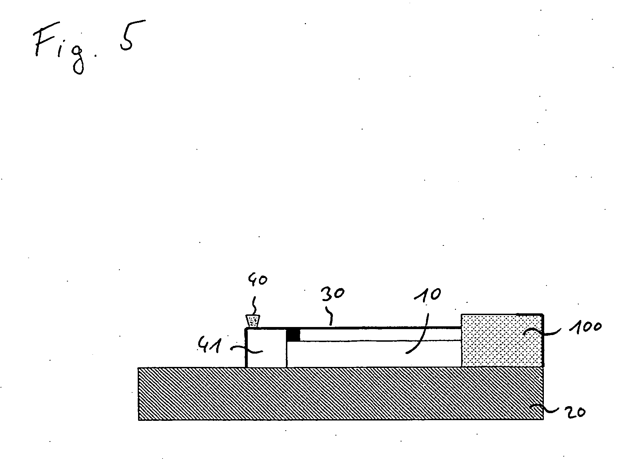

Another embodiment which is adopted to make use of capillary forces in order to achieve the lateral flow of an analyte solution through the spotted membrane of the present invention is illustrated in Fig. 5. The force necessary to push the sample and the other different solutions into the membrane is generated by capillary forces only. This can be easily achieved by providing an absorbent pad (100) in the second cavity (42). Fig. 5 shows the embodiment having a hybridization chamber and a membrane array device constructed in such way that the sample is flowing laterally through the membrane from one end to the other end, wherein the moving force is not centrifugal or air, but only the capillary force of the absorbent pad (100) positioned at the opposite end, i.e. the second cavity (42). The hybridization chamber is designed in a lighter construction, providing a first cavity (41) at one end of the membrane with the sealing means (30), composed of any available means like o-rings or soft plastic polymer rim, to avoid the sample to overflow on the surface of the membrane, and the second cavity (42) at the other end of the membrane. This second cavity contains an absorbent pad (100) which can be of e.g. paper, glass fibers or nonwoven or other porous media, and can have absorbing chemicals like hydrogels or others. This pad is in contact with the membrane (10). When the sample is poored in the first cavity, the liquid is drawn into the membrane, and will flow laterally through the membrane through the capillary forces of the membrane and then of the absorbent pad. To avoid any overflow in the first cavity (41), this ca-vity might also contain a sample pad (loading pad) of lower capillary force than the opposite absorbent pad. The sample can then be directly dispensed on this pad.

### Reference List

- 10: microporous membrane
- 11: upper surface of the microporous membrane
- 15: writing zone
- 20: receptacle, in particular a microarray slide
- 30: sealing means
- 31: cover element
- 32: holding element
- 40: inlet port
- 41: first cavity
- 41': recess
- 42: second cavity
- 42': recess
- 50: outlet port
- 60: housing device
- 61: base member
- 62: lever element
- 70: pressure exerting means
- 80: locking means
- 90, 92: first, second pressure source
- 95A: porous support layer
- 95B: porous material layer
- 100: absorbent pad

## Claims

1. A microarray assembly adopted for carrying out a chemical reaction, in particular a hybridization reaction, comprising a microporous membrane (10) having a plurality of different analyte-specific capture molecules attached in a microarray format, said membrane being arranged in an incubation chamber, said device further comprising:
a receptacle (20) for receiving said microporous membrane, **characterised in that** said device further comprising:
sealing means (30) for substantially encapsulating said membrane in opposition to said receptacle, so that said membrane is urged between said receptacle and said sealing means,
at least one inlet port (40) for supplying a fluid to a first cavity (41) adjacent to a first end of said membrane, and
a second cavity (4-2) arranged at a substantially opposite second end of said membrane, thereby allowing a fluid laterally flow from said first to said second cavity through said membrane.

2. The microarray assembly according to claim 1, further comprising at least one outlet port (50) for venting and discharging said fluid, wherein said at least one outlet port is preferably arranged in fluid connection with said second cavity.

3. The microarray assembly according to claim 1 or 2, wherein said sealing means (30) comprise a cover element (31) contactable with the upper surface (11) of said membrane.

4. The microarray assembly according to claim 3, wherein said cover element (31) is formed by plastic plate-like sheet, preferably made of silicone.

5. The microarray assembly according to claim 3 or 4, wherein said sealing means (30) further comprise a holding element (32) for directly or indirectly urging said cover element against the upper surface of said membrane.

6. The microarray assembly according to claim 5, wherein said holding element (32) comprises said at least one inlet port (40) and/or said at least one outlet port (50).

7. The microarray assembly according to anyone of claims 1 to 6, wherein said receptacle (20) comprises a recess (41') for receiving said membrane.

8. The microarray assembly according to claim 7, wherein said recess (41') at least partly exceeds the dimensions of said membrane (10), so as to form said first and second cavities (41, 42).

9. The microarray assembly according to anyone of claims 1 to 8, further comprising a housing device (60) which is adapted to hold said sealing means (30) and said receptacle (20) together, so as to urge said membrane between said receptacle and said sealing means.

10. The microarray assembly according to claim 9, wherein said housing device (60) comprises a base member (61) for receiving said receptacle (20) and at least one lever element (62) pivotable arranged at said base member, so that said receptacle, said membrane and said sealing means are at least partly hold between said base member and said lever element.

11. The microarray assembly according to anyone of claims 1 to 10, wherein said sealing means (30) comprise locking means (80) for fastening said sealing means to said receptacle with said membrane therebetween.

12. The microarray assembly according to anyone of claims 1 to 11, further comprising pressure exerting means (70) for directly or indirectly exerting a force or pressure on said sealing means and/or said receptacle, wherein said direction of said force or pressure is preferably substantially perpendicular to the widthwise direction of said membrane.

13. The microarray assembly according to claim 12, wherein said pressure exerting means (70) are directly or indirectly provided on said sealing means and/or said receptacle and preferably have a tapered configuration, most preferably wedge-shaped.

14. The microarray assembly according to anyone of the preceding claims, wherein a vessel (90) which is set under pressure, is brought into fluid connection with the first cavity (41).

15. The microarray assembly according to claim 14, wherein a second air pressure source (92), preferably identical or similar to the air pressure source (90), is provided and brought into fluid connection with the second cavity (42).

16. The microarray assembly according to anyone of the preceding claims, wherein the membrane (10) is sandwiched between an overlaying porous material layer (95B) and a porous support layer (95A), wherein the pore size of both of the overlaying porous material layer (95B) and the porous support layer (95A) is greater than the pore size of the membrane.

17. The microarray assembly according to claim 16, wherein the first cavity (41) of the chamber is designed in such way that when a solution is introduced, it can only access the lateral section of the membrane and of the porous material layer (95B).

18. The microarray assembly according to anyone of the preceding claims, wherein an absorbent pad (100) which is in contact with the membrane (10), is provided in the second cavity (42) so that when the sample is poored in the first cavity (41), the liquid is drawn into the membrane, and will flow laterally through the membrane through the capillary forces of the membrane and then of the absorbent pad.

19. The microarray assembly according to claim 18, wherein the first cavity (41) contains a sample pad of lower capillary force than the opposite absorbent pad (100) in the second cavity (42).

20. The microarray assembly according to anyone of claims 1 to 19, wherein said analyte-specific capture molecules are proteins, antibodies or nucleic acids.

21. The microarray assembly according to anyone of claims 1 to 20, wherein said microporous membrane is made of cellulose nitrate, cellulose acetate or mixtures thereof.

22. The microarray assembly according to anyone of claims 1 to 21, wherein the micropores of said microporous membrane are between 0.05 and 10 µm.

## Patentansprüche

1. Mikroarray-Anordnung, die zur Durchführung einer chemischen Reaktion, insbesondere einer Hybridisierungsreaktion angepasst ist, und eine mikroporöse Membran (10) mit einer Mehrzahl verschiedener Analyt-spezifischer Fängermoleküle, die in einem Mikroarray-Format gebunden bzw. befestigt sind, umfasst, wobei die Membran in einer Inkubationskammer angeordnet ist, wobei die Vorrichtung weiter umfasst:
einen Aufnahmebehälter (20) zur Aufnahme der mikroporösen Membran, **dadurch gekennzeichnet, daß** Vorrichtung weiter umfasst:
ein Abdichtungsmittel (30) zum im Wesentlichen Einkapseln der Membran gegenüber dem Aufnahmebehälter, so dass die Membran zwischen dem Aufnahmebehälter und dem Abdichtungsmittel eingeklemmt ist,
mindestens eine Einlassöffnung (40) zum Zuführen eines Fluids zu einem ersten Hohlraum (41), der an ein erstes Ende der Membran angrenzt, und
einen zweiten Hohlraum (42), der an einem im Wesentlichen gegenüber liegenden zweiten Ende der Membran angeordnet ist, wodurch ein Fluid von dem ersten zu dem zweiten Hohlraum lateral durch die Membran fließen kann.

2. Mikroarray-Anordnung nach Anspruch 1, die weiter mindestens eine Auslassöffnung (50) zum Belüften und zum Austragen des Fluids umfasst, wobei die mindestens eine Auslassöffnung vorzugsweise in einer Fluidverbindung mit dem zweiten Hohlraum angeordnet ist.

3. Mikroarray-Anordnung nach Anspruch 1 oder 2, bei der das Abdichtungsmittel (30) ein Abdeckungselement (31) umfasst, das mit der oberen Fläche (11) der Membran in Kontakt gebracht werden kann.

4. Mikroarray-Anordnung nach Anspruch 3, bei der das Abdeckungselement (31) durch eine Kunststoffplatten-artige Lage, die vorzugsweise aus Silikon hergestellt ist, ausgebildet ist.

5. Mikroarray-Anordnung nach Anspruch 3 oder 4, bei der das Abdichtungsmittel (30) weiter ein Halteelement (32) zum direkten oder indirekten Drücken des Abdeckungselements gegen die obere Fläche der Membran umfasst.

6. Mikroarray-Anordnung nach Anspruch 5, bei der das Halteelement (32) die mindestens eine Einlassöffnung (40) und/oder die mindestens eine Auslassöffnung (50) umfasst.

7. Mikroarray-Anordnung nach einem der Ansprüche 1 bis 6, bei welcher der Aufnahmebehälter (20) eine Aussparung (41') zur Aufnahme der Membran umfasst.

8. Mikroarray-Anordnung nach Anspruch 7, bei der die Aussparung (41') mindestens teilweise die Abmessungen der Membran (10) überschreitet, so dass der erste und der zweite Hohlraum (41, 42) gebildet werden.

9. Mikroarray-Anordnung nach einem der Ansprüche 1 bis 8, die weiter eine Gehäusevorrichtung (60) umfasst, die zum Zusammenhalten des Abdichtungsmittels (30) und des Aufnahmebehälters (20) angepasst ist, so dass die Membran zwischen dem Aufnahmebehälter und dem Abdichtungsmittel eingeklemmt ist.

10. Mikroarray-Anordnung nach Anspruch 9, bei der die Gehäusevorrichtung (60) ein Basiselement (61) zum Aufnehmen des Aufnahmebehälters (20) und mindestens ein Hebelelement (62) umfasst, das drehbar an dem Basiselement angeordnet ist, so dass der Aufnahmebehälter, die Membran und das Abdichtungsmittel mindestens teilweise zwischen dem Basiselement und dem Hebelelement gehalten sind.

11. Mikroarray-Anordnung nach einem der Ansprüche 1 bis 10, bei der das Abdichtungsmittel (30) Verriegelungsmittel (80) zum Befestigen des Abdichtungsmittels an dem Aufnahmebehälter umfasst, wobei die Membran dazwischen angeordnet ist.

12. Mikroarray-Anordnung nach einem der Ansprüche 1 bis 11, die weiter Druckausübungsmittel (70) zum direkten oder indirekten Ausüben einer Kraft oder eines Drucks auf das Abdichtungsmittel und/oder den Aufnahmebehälter umfasst, wobei die Richtung der Kraft oder des Drucks vorzugsweise im Wesentlichen senkrecht zu der Breitenrichtung der Membran ist.

13. Mikroarray-Anordnung nach Anspruch 12, bei der die Druckausübungsmittel (70) direkt oder indirekt auf dem Abdichtungsmittel und/oder dem Aufnahmebehälter bereitgestellt sind und vorzugsweise eine sich verjüngende Konfiguration aufweisen und insbesondere keilförmig sind.

14. Mikroarray-Anordnung nach einem der vorstehenden Ansprüche, bei der ein Behälter (90), der unter Druck gesetzt ist, mit dem ersten Hohlraum (41) in eine Fluidverbindung gebracht ist.

15. Mikroarray-Anordnung nach Anspruch 14, bei der eine zweite Luftdruckquelle (92), die vorzugsweise mit der Luftdruckquelle (90) identisch oder dieser ähnlich ist, bereitgestellt ist und mit dem zweiten Hohlraum (42) in eine Fluidverbindung gebracht ist.

16. Mikroarray-Anordnung nach einem der vorstehenden Ansprüche, bei der die Membran (10) sandwichartig zwischen einer darüber liegenden porösen Materialschicht (95B) und einer porösen Trägerschicht (95A) angeordnet ist, wobei die Porengröße sowohl der darüber liegenden porösen Materialschicht (95B) als auch der porösen Trägerschicht (95A) größer ist als die Porengröße der Membran.

17. Mikroarray-Anordnung nach Anspruch 16, bei welcher der erste Hohlraum (41) der Kammer so gestaltet ist, dass dann, wenn eine Lösung eingeführt wird, die Lösung nur den lateralen Abschnitt der Membran und der porösen Materialschicht (95B) erreichen kann.

18. Mikroarray-Anordnung nach einem der vorstehenden Ansprüche, bei der eine Absorptionsmittellage (100), die mit der Membran (10) in Kontakt ist, in dem zweiten Hohlraum (41) bereitgestellt ist, so dass dann, wenn die Probe in den ersten Hohlraum (41) eingebracht wird, die Flüssigkeit in die Membran gezogen wird und aufgrund der Kapillarkräfte der Membran und dann der Absorptionsmittellage lateral durch die Membran fließt.

19. Mikroarray-Anordnung nach Anspruch 18, bei welcher der erste Hohlraum (41) eine Probenlage mit einer niedrigeren Kapillarkraft als die gegenüber liegende Absorptionsmittellage (100) in dem zweiten Hohlraum (42) enthält.

20. Mikroarray-Anordnung nach einem der Ansprüche 1 bis 19, bei der die Analytspezifischen Fängermoleküle Proteine, Antikörper oder Nukleinsäuren sind.

21. Mikroarray-Anordnung nach einem der Ansprüche 1 bis 20, bei der die mikroporöse Membran aus Cellulosenitrat, Celluloseacetat oder Gemischen davon hergestellt ist.

22. Mikroarray-Anordnung nach einem der Ansprüche 1 bis 21, bei der die Mikroporen der mikroporösen Membran eine Größe zwischen 0,05 und 10 µm aufweisen.

## Revendications

1. Système de micro-réseaux adapté pour exécuter une réaction chimique, en particulier une réaction d'hybridation, comprenant une membrane microporeuse (10) ayant une pluralité de molécules de capture différentes spécifiques de l'analyse fixées suivant un format de micro-réseaux, ladite membrane étant disposée dans une chambre d'incubation, ledit dispositif comprenant en outre :
un réceptacle (20) pour recevoir ladite membrane microporeuse, **caractérisé en ce que** ledit dispositif comprend en outre :
des moyens de fermeture (30) pour encapsuler sensiblement ladite membrane par rapport audit réceptacle, de sorte que ladite membrane soit serrée entre ledit réceptacle et lesdits moyens de fermeture,
au moins un orifice d'admission (40) pour acheminer un fluide vers une première cavité (41) adjacente à une première extrémité de ladite membrane, et
une seconde cavité (42) disposée sur une seconde extrémité sensiblement opposée de ladite membrane, permettant ainsi à un fluide de s'écouler latéralement de ladite première à ladite seconde cavité à travers ladite membrane.

2. Système de micro-réseaux selon la revendication 1, comprenant en outre au moins un orifice de sortie (50) pour aérer et évacuer ledit fluide, dans lequel ledit au moins un orifice de sortie est disposé de préférence en communication fluidique avec ladite seconde cavité.

3. Système de micro-réseaux selon la revendication 1 ou 2, dans lequel lesdits moyens de fermeture (30) comprennent un élément de couverture (31) pouvant entrer en contact avec la surface supérieure (11) de ladite membrane.

4. Système de micro-réseaux selon la revendication 3, dans lequel ledit élément de couverture (31) est formé d'une feuille en plastique en forme de plaque, de préférence faite de silicone.

5. Système de micro-réseaux selon la revendication 3 ou 4, dans lequel lesdits moyens de fermeture (30) comprennent en outre un élément de support (32) pour pousser directement ou indirectement ledit élément de couverture contre la surface supérieure de ladite membrane.

6. Système de micro-réseaux selon la revendication 5, dans lequel ledit élément de support (32) comprend ledit au moins un orifice d'admission (40) eL/ou ledit au moins un orifice de sortie (50).

7. Système de micro-réseaux selon l'une quelconque des revendications 1 à 6, dans lequel ledit réceptacle (20) comprend un renfoncement (41') pour recevoir ladite membrane.

8. Système de micro-réseaux selon la revendication 7, dans lequel ledit renfoncement (41') dépasse au moins partiellement les dimensions de ladite membrane (10), de sorte à former lesdites première et seconde cavités (41, 42).

9. Système de micro-réseaux selon l'une quelconque des revendications 1 à 8, comprenant en outre un dispositif formant boîtier (60) qui est adapté pour retenir lesdits moyens de fermeture (30) et ledit réceptacle (20) ensemble, de sorte à serrer ladite membrane entre ledit réceptacle et lesdits moyens de fermeture.

10. Système de micro-réseaux selon la revendications 9, dans lequel ledit dispositif formant boîtier (60) comprend un élément de base (61) pour recevoir ledit réceptacle (20) et au moins un élément formant levier (62) disposé de manière pivotante au niveau dudit élément de base, de sortie que ledit réceptacle, ladite membrane et lesdits moyens de fermeture soient au moins partiellement retenus entre ledit élément de base et ledit élément formant levier.

11. Système de micro-réseaux selon l'une quelconque des revendications 1 à 10, dans lequel lesdits moyens de fermeture (30) comprennent des moyens de verrouillage (80) pour fixer lesdits moyens de fermeture audit réceptacle, ladite membrane étant situés entre ceux-ci.

12. Système de micro-réseaux selon l'une quelconque des revendications 1 à 11, comprenant en outre des moyens d'exercice de pression (70) pour exercer directement ou indirectement une force ou pression sur lesdits moyens de fermeture et/ou sur ledit réceptacle, dans lequel ledit sens de ladite force ou pression est de préférence sensiblement perpendiculaire au sens de la largeur de ladite membrane.

13. Système de micro-réseaux selon la revendication 12, dans lequel lesdits moyens d'exercice de pression (70) sont directement ou indirectement fournis sur lesdits moyens de fermeture et/ou ledit réceptacle eL ils ont de préférence une configuration tronconique, de manière préférée entre toutes en forme de coin.

14. Système de micro-réseaux selon l'une quelconque des revendications précédentes, dans lequel un récipient (90) qui est mis sous pression, est mis en communication fluidique avec la première cavité (41).

15. Système de micro-réseaux selon la revendication 14, dans lequel une seconde source d'air comprimé (92), de préférence identique ou similaire à la source d'air comprimé (90), est fournie et mise en communication fluidique avec la seconde cavité (42).

16. Système de micro-réseaux selon l'une quelconque des revendications précédentes, dans lequel la membrane (10) est prise en sandwich entre une couche superposée de matériau poreux (958) et une couche de support poreuse (95A), dans lequel la dimension des pores de la couche superposée de matériau poreux (95B) ainsi que de la couche de support poreuse (95A) est supérieure à la dimension des pores de la membrane.

17. Système de micro-réseaux selon la revendication 16, dans lequel la première cavité (41) de la chambre est conçue de telle manière que quand une solution est introduite, elle peut seulement accéder à la section latérale de la membrane et de la couche de matériau poreux (95B).

18. Système de micro-réseaux selon l'une quelconque des revendications précédentes, dans lequel un tampon absorbant (100) qui est en contact avec la membrane (10), est positionné dans la seconde cavité (42) de sorte que quand l'échantillon est versé dans la première cavité (41), le liquide est aspiré dans la membrane, et s'écoule latéralement à travers la membrane du fait des forces capillaires de la membrane puis du tampon absorbant.

19. Système de micro-réseaux selon la revendication 18, dans lequel la première cavité (41) contient un tampon à échantillon de force capillaire inférieure à celle du tampon absorbant opposé (100) dans la seconde cavité (42).

20. Système de micro-réseaux selon l'une quelconque des revendications 1 à 19, dans lequel lesdites molécules de capture spécifiques de l'analyte sont des protéines, des anticorps ou des acides nucléiques.

21. Système de micro-réseaux selon l'une quelconque des revendications 1 à 20, dans lequel ladite membrane microporeuse est faite de nitrate de cellulose, d'acétate de cellulose ou de mélanges de ceux-ci.

22. Système de micro-réseaux selon l'une quelconque des revendications 1 à 21, dans lequel les micropores de ladite membrane microporeuse mesurent de 0,05 à 10 µm.
